**Europäisches Patentamt**

**European Patent Office**

**Office européen des brevets**

(19)

(11) Veröffentlichungsnummer : **0 433 618 B1**

(12)

# EUROPÄISCHE PATENTSCHRIFT

(45) Veröffentlichungstag der Patentschrift :
**30.12.92 Patentblatt 92/53**

(51) Int. Cl.$^5$ : **B01J 13/18, B41M 5/165**

(21) Anmeldenummer : **90120731.6**

(22) Anmeldetag : **29.10.90**

(54) **Verfahren zur Herstellung von Mikrokapseln, die danach erhältlichen Mikrokapseln und deren Verwendung.**

(30) Priorität : **20.12.89 DE 3942155**

(43) Veröffentlichungstag der Anmeldung :
**26.06.91 Patentblatt 91/26**

(45) Bekanntmachung des Hinweises auf die
Patenterteilung :
**30.12.92 Patentblatt 92/53**

(84) Benannte Vertragsstaaten :
**ES FR GB**

(56) Entgegenhaltungen :
**EP-A- 0 059 353**
**DE-A- 3 818 712**

(73) Patentinhaber : **Papierfabrik August Koehler
AG**
**Postfach 1245**
**W-7602 Oberkirch (DE)**

(72) Erfinder : **Pietsch, Günter**
**Burgwedeler Strasse 150**
**W-3004 Isernhagen 2/HB (DE)**
Erfinder : **Schrader, Karl-Heinz**
**Parsevalstrasse 27**
**W-3000 Hannover 1 (DE)**

(74) Vertreter : **Hagemann, Heinrich, Dr.
Dipl.-Chem. et al**
**Patentanwälte HAGEMANN & KEHL**
**Ismaninger Strasse 108 Postfach 860329**
**W-8000 München 86 (DE)**

**Beschreibung**

Die Erfindung betrifft ein Verfahren zur Mikroverkapselung von hydrophoben Ölen mit darin gelösten oder dispergierten Substanzen, wobei ein die Substanz gelöst oder dispergiert enthaltendes hydrophobes Öl unter starkem Rühren in ein eine dispersionsstabilisierende Verbindung enthaltendes wässriges Medium eingemischt wird, in der erhaltenen Öl-in-Wasser-Dispersion in üblicher Weise Aminoplastkapseln gebildet und diese gegebenenfalls anschließend isoliert werden, wobei das wässrige Medium ein wasserlösliches modifiziertes anionisches Melamin-Formaldehyd-Vorkondensat sowie eine solche wasserlösliche kationische Verbindung enthält, die in Wechselwirkung miteinander eine dispersionsstabilisierende Verbindung bilden, sowie die danach erhältlichen Mikrokapseln und deren Verwendung, insbesondere in Reaktionsdurchschreibesystemen.

Ein Verfahren der eingangs beschriebenen Art geht aus der DE-A-38 18 712 hervor. Das modifizierte wasserlösliche Melamin-Formaldehyd-Vorkondensat ist ein wasserlösliches anionisches, sulfoniertes Melamin-Formaldehyd-Vorkondensat, das vorzugsweise pro Melamin-Ring im Mittel etwa 0,7 bis 1,3 Sulfonatgruppen aufweist. Weitere bevorzugte Ausgestaltungen gehen aus den Patentansprüchen der DE-C-37 43 427 hervor. Für die später detailliert erläuterte Erfindung sind noch folgende Sachverhalte aus der DE-A-38 18 712 von Bedeutung:

Das Wesen der bekannten Lehre besteht in dem Einsatz eines wasserlöslichen anionischen, sulfonierten Melamin-Formaldehyd-Vorkondensates in Verbindung mit einem solchen wasserlöslichen kationischen Reaktionspartner, der in Wechselwirkung mit diesem speziellen Melamin-Formaldehyd-Vorkondensat eine emulsions- bzw. dispersionsstabilisierende Wirkung entfaltet. Anhand einfacher Handversuche ist es möglich, die jeweils geeigneten Reaktionspartner zu ermitteln. Geeignete wasserlösliche anionische, sulfonierte Melamin-Formaldehyd-Vorkondensate sind im Stand der Technik bekannt, so beispielsweise aus der Zeitschrift "Zement.Kalk.Gips", Bauverlag, Wiesbaden, Jahrgang 21 (1968), Heft 10, S. 415-419. Darin wird seine Eignung als verflüssigendes Mittel von Zement, Mörtel und Gips angesprochen. Unter den Begriff "wechselwirkende kationische Verbindung" fallen vielfältige Verbindungen, so z.B. kationische Polyethylenimine, Polyamidoamine, Polyetheramine, Polyamidamin-Epichlorhydrine, Dicyanamid-Formaldehyd-Komplexe, modifizierte Alkylarylpolyglykolether, Fettsäureamidkondensationsprodukte, Amin-Amid-Formaldehyd-Kondensationsprodukte, Dicyandiamidderivate, Imidazolinderivate, Aminocarbonsäureester, quaternäre Esterammoniumverbindungen sowie verschiedene andere kationisierte Melamin-Formaldehyd-Vorkondensate. Auf jeden Fall wählt der Fachmann aus dieser Gruppe von Verbindungen solche aus, die die angesprochene dispersionsstabilisierende Wechselwirkung mit dem genannten anderen Reaktionspartner ermöglichen. Mit besonderem Vorteil werden spezielle kationisierte Melamin-Formaldehyd-Vorkondensate als Reaktionspartner eingesetzt. Diese sind in der Regel unter neutralen Bedingungen wasserlöslich. In Einzelfällen erlangen sie erst in stärker saurem Medium durch eine verstärkte Kationisierung Wasserlöslichkeit, die bei pH-Wertanhebung im Verlaufe des Mikrokapselherstellungsverfahrens bewahrt werden kann.

Kern des bekannten Verfahrens ist nicht die Art und Weise, wie die Aminoplastkapseln ausgebildet werden. Dies kann durch übliche Techniken erfolgen. So können beispielsweise die Aminoplaste aus Aldehydkondensaten auf der Basis von Melamin, Harnstoff, Thioharnstoff, N-Alkylharnstoff, Guanidin, Acetoguanamin, Benzoguanamin, Caprinoguanamin, Cyanamid, Dicyandiamid und Alkyl/Arylsulfonamid bestehen. Als bevorzugter Aldehyd gilt der Formaldehyd; es können aber auch höhere Aldehyde zum Einsatz kommen.

Bei dem bekannten Verfahren sind die Fachkenntnisse im Hinblick auf Steuerungsparameter der Aminoplastkondensation uneingeschränkt anwendbar. Dies gilt auch für die Wahl des Materials, das die Aminoplast-Kapselhülle bildet, vorzugsweise handelt es sich um nicht-ionogene Melamin-Formaldehyd-Vorkondensate. Einsetzbar ist jedes beliebige geeignete hydrophobe Öl, in dem beispielsweise der Farbbildner oder dessen saurer Reaktionspartner, sofern es sich hier um eine lösliche Verbindung (z.B. eine phenolische Verbindung) handelt, gelöst sind, das in Wasser praktisch unlöslich bzw. damit nicht mischbar ist. Eine geringe Löslichkeit ist vernachlässigbar.

Mit dem bekannten Verfahren können beliebige Substanzen eingekapselt werden, dispergiert (gelöst, emulgiert und/oder suspendiert) in einem hydrophoben Öl, so beispielsweise Duft- und Aromastoffe, Geschmackstoffe, Vitamine, Düngemittel, Insektizide, Fungizide, Flammschutzmittel, Pflanzenschutzmittel, Reinigungsmittel, Lösemittel, Schmierstoffe, Leuchtfarbstoffe, Flüssigkristalle, Klebstoffe für Ein- oder Mehrkomponentensysteme, Farbpigmentdispersionen, Magnetpigmentdispersionen in Öl- bzw. Wachsträgermaterialien und Farbreaktionspartner von Farbreaktionssystemen. Das Gewichtsverhältnis der beiden oben erörterten wechselwirkenden Reaktionspartner ist nach den Angaben des Standes der Technik nicht kritisch. Der Fachmann kann die optimalen Verhältnisse in Abhängigkeit von der Art der jeweils eingesetzten Materialien und ihrer Konzentration im Rahmen geeigneter Vorversuche ohne weiteres ermitteln.

Im einzelnen wird bei dem bekannten Verfahren unter Heranziehen der oben genannten Ausgangsmaterialien vorzugsweise wie folgt vorgegangen: eine etwa 1 bis 25, vorzugsweise etwa 4 bis 10 gew.-

%ige wässrige Lösung des wasserlöslichen anionischen, sulfonierten Melamin-Formaldehyd-Vorkondensats wird in einer solchen Menge mit einer wasserlöslichen kationischen Verbindung, insbesondere einem kationisierten Melamin-Formaldehyd-Vorkondensat versehen, daß die Konzentration der letzteren Verbindung etwa 0,3 bis 3 Gew.-% beträgt. Zur Erzielung einer optimalen Dispersionsstabilisierung wird vorzugsweise beim Vermischen der Ausgangsmaterialien ein Hochleistungsdispergiergerät herangezogen, wie es beispielsweise in der DE-C 35 45 803 beschrieben wird. Der pH-Wert der entstandenen Lösung liegt bei etwa 3,0 bis 5,0. Anschließend wird das einzukapselnde Material bzw. das hydrophobe Öl, in dem eine beliebige Substanz gelöst sein kann, unter starkem Rühren mit einem Hochleistungsdispergiergerät in diese wässrige Lösung eingerührt. Nach oder vor dem Zumischen der Ölphase wird die Mischung bzw. die Öl-in-Wasser-Dispersion im Hinblick auf die bei der späteren Bildung der Kapselhülle ablaufenden Kondensationsreaktion, die durch Säuren katalysiert wird, sauer eingestellt. Hierzu können beliebige anorganische oder organische Säuren herangezogen werden, sofern sie ausreichende Azidität aufweisen und zu keinen störenden Nebeneffekten Anlaß geben, so insbesondere Essigsäure, Ameisensäure und Phosphorsäure. Der für die Kondensationsreaktion optimale pH-Wert liegt im allgemeinen im schwach sauren Bereich, insbesondere zwischen etwa 3 und 6, wobei der Bereich von etwa 3,5 bis 5 bevorzugt wird. In die in obiger Weise zubereitete Mischung wird beispielsweise die wässrige Lösung des nicht-ionogenen Melamin-Formaldehyd-Vorkondensats, das nachfolgend die Kapselhülle bildet, eingerührt. Hierzu sind übliche bekannte Rühreinrichtungen geeignet. Die erwähnten Hochleistungsdispergiergeräte dürfen hier nicht herangezogen werden, da sie die Ausbildung der Kapselhülle durch die Kondensationsreaktion des nicht-ionogenen Melamin-Formaldehyd-Vorkondensats stören würden. Während des gesamten Reaktionsablaufs erfolgt eine optimale Dispersionsstabilisierung durch die angesprochene Wechselwirkung der genannten Reaktionspartner. Wenn die Kondensationsreaktion in dem gewünschten Ausmaß abgelaufen ist, wird der pH-Wert durch Zugabe von Alkalien neutral oder schwach alkalisch eingestellt, so daß eine weitere Reaktion weitgehend ausgeschlossen wird, die bei der Lagerung der Mikrokapseln zu einer Agglomeratbildung führen könnte. Das bekannte Verfahren kann chargenweise aber auch kontinuierlich geführt werden.

Technologisch läßt sich der bekannte Vorschlag wie folgt erläutern: durch die Wechselwirkung des wasserlöslichen anionischen, sulfonierten Melamin-Formaldehyd-Vorkondensats mit seinem wasserlöslichen kationischen Reaktionspartner scheint ein Komplex zu entstehen, der wasserlöslich ist und die gewünschte Stabilisierung der Öl-in-Wasser-Dispersion bewirkt. Hierbei befindet sich das wasserlösliche anionische, sulfonierte Melamin-Formaldehyd-Vorkondensat gegenüber seinem wechselwirkenden Reaktionspartner vorzugsweise im Überschuß. Somit könnte man daraus folgern, daß der stabilisierende Komplex anionischen Charakter hat bzw. sich die Summe der Wechselwirkungen anionisch auswirkt. Weder das wasserlösliche anionische, sulfonierte Melamin-Formaldehyd-Vorkondensat noch der wasserlösliche kationische Reaktionspartner allein zeigen die gewünschte Stabilisierungswirkung. In Einzelfällen kann der dispersionsstabilisierende Komplex auch zu der Charakteristik einer kolloidalen Lösung führen. In Ausnahmefällen kann auch eine gewisse Ausfällung eintreten, ohne daß hiermit eine Destabilsierung der Öl-in-Wasser-Dispersion, in der die Kapselwandbildungsmechanismen ablaufen, eintritt.

Mit dem oben beschriebenen bekannten Verfahren sind vielfältige Vorteile verbunden, so ist insbesondere die Gewinnung qualitativ hochwertiger trockener Einzelkapseln möglich, die in unterschiedlichen Medien eingebracht werden können, um mit diesen auf geeignete Träger aufgetragen zu werden. Die Möglichkeit der Herstellung vorteilhafter Einzelkapseln unter Ausschluß nachteiliger Agglomerate führt dazu, daß sich die Einzelkapseln nach Redispergieren in geeigneten Lösungsmitteln, wie aliphatischen Alkoholen, cycloaliphatischen, paraffinischen und isoparaffinischen Kohlenwasserstoffen, halogenierten Kohlenwasserstoffen, niedrigen Alkylethern und -estern, im Falle von eingekapselten Farbbildnern besonders gut zum störungsfreien Druck (Ausschluß von Quellen des Papiers, verbesserte Schreibqualität), insbesondere zum segmentartigen Drucken eignen, z.B, beim Flexodruck, Siebdruck und Tiefdruck, um nur dort einen Kapselauftrag vorzunehmen, wo später Durchschreibevorgänge ablaufen. Analoge Aussagen gelten für die Herstellung von Naß- und Trocken-Offset- und Hot-Melt-Druckfarben. Neben dem erwünschten Kostenvorteil der Spotdruckverfahren im Vergleich zur Vollflächenbeschichtung bzw. zum Vollflächendruck erhält der Drucker die Möglichkeit, einen Formularsatz individuell gestalten zu können.

Wenngleich das aus der DE-A-38 18 712 bekannte Verfahren eine Vielzahl von Vorteilen aufweist, hat es sich gezeigt, daß dennoch gewisse Verbesserungen angestrebt werden könnten. Diese ergeben sich aus den Eigenschaften des zur Bildung des dispersionsstabilisierenden Komplexes herangezogenen wasserlöslichen anionischen, sulfonierten Melamin-Formaldehyd-Vorkondensats. So werden bei der Herstellung dieser sulfonierten Melamin-Formaldehyd-Vorkondensate Mineralsäuren, so beispielsweise insbesondere Schwefelsäure, Salzsäure, Phosphorsäure und dergleichen, eingesetzt. In den erhaltenen Harzlösungen liegen daher Sulfate, Chloride, Phosphate und dergleichen vor, die bei dem späteren Einsatz stören können. Dieser Mineralsalzgehalt ist eine Belastung für das Kapselherstellungsverfahren. Auf diesen nachteiligen Gehalt an Mineralsalzen geht auch die EP-B-0 059 353 ein, die diese Verbindungen als Zusatz zu Baustoffen beschreibt.

Der Erfindung lag die Aufgabe zugrunde, das eingangs bezeichnete Verfahren so weiterzubilden, daß die erwähnten Nachteile des Mineralsalzgehaltes in den eingesetzten anionischen modifizierten Melamin-Formaldehyd-Vorkondensaten weitestgehend ausgeschlossen werden.

Erfindungsgemäß wird diese Aufgabe dadurch gelöst, daß ein solches wasserlösliches anionisches modifiziertes Melamin-Formaldehyd-Vorkondensat eingesetzt wird, das dadurch erhalten worden ist, indem man

a) in einer ersten Stufe Melamin und einen Aldehyd bei erhöhter Temperatur in alkalischem Medium und in Gegenwart von Wasser mit wenigstens einer Verbindung (I) in Form eines Alkalisulfits, Erdalkalisulfits, eines Alkalisulfamats, eines Erdalkalisulfamats, einer Aminosulfonsäure, einer Aminocarbonsäure und einer Aminodicarbonsäure zu einem Vorkondensat umsetzt,

b) anschließend in einer zweiten Stufe dieses Vorkondensat bei einem pH-Wert von etwa 5,5 bis 7,0 einer Polykondensation unterwirft, indem man mit wenigstens einer sauren Verbindung (II) in Form von Sulfaminsäure, einer Aminocarbonsäure, einer Aminodicarbonsäure, einer Hydroxycarbonsäure, einer Polyhydroxycarbonsäure und einer Aminosulfonsäure ansäuert, und

c) nach beendigter Polykondensation die erhaltene Harzlösung gegebenenfalls durch Zugabe wenigstens einer basischen Verbindung (III) alkalisch stellt.

Die erfindungsgemäßen Lösungsmerkmale ergeben sich aus der EP-B-0 059 353, die sich mit der Herstellung hoch konzentrierter, niedrig-viskoser, wässriger Lösungen von Melamin/Aldehyd-Harzen im Zusammenhang mit deren Verwendung als Zusatz zu Baustoffen befaßt. Dieser Druckschrift lassen sich keinerlei Anregungen entnehmen, daß die dort beschriebenen vorteilhaften Melamin-Formaldehyd-Vorkondensate bei der Herstellung von Mikrokapseln in wässrigen Dispersionen eine Bedeutung haben könnten, um dort in Wechselwirkung mit speziellen wasserlöslichen kationischen Verbindungen eine dispersionsstabilisierende Spezies zu bilden. Der Kern der vorliegenden Erfindung besteht demzufolge in der Auswahl spezieller wasserlöslicher anionischer modifizierter Melamin-Formaldehyd-Kondensate, die nach dem Stand der Technik als Bauzusatzstoffe herangezogen werden. Die mit dem aus der DE-A-38 18 712 bekannten Mikrokapselverfahren verbundenen Vorteile werden uneingeschränkt mit dem Ergebnis aufrechterhalten, daß weitere Vorteile hinzukommen, so beispielsweise die Ausklammerung unerwünschten Mineralsalzgehaltes. Mit dem neuen Melamin-Formaldehyd-Vorkondensat-Reaktionspartner im dispersionsstabilisierenden Komplex ist außerdem eine flexiblere Steuerung des Kondensationsprozesses des Kapselwandbildungsmaterials möglich. So kann durch gezielte Auswahl aus der erfindungsgemäß geeigneten Verbindungsgruppe die Reaktionsgeschwindigkeit der Kapselwandbildung verlangsamt oder im Einzelfall auch beschleunigt werden, was für den geschilderten Stand der Technik nicht gilt. Der mögliche Einsatz von Aminocarbonsäuren führt zu besonders günstigen Effekten, da hierdurch die Konzentration an freiem Formaldehyd in der wässrigen Öl-in-Wasser-Dispersion in besonders gewünschtem Maße gesenkt werden kann, ohne daß zusätzliche Formaldehyd-Fänger verwendet werden müssen.

Besonders vorteilhafte Ausgestaltungen des erfindungsgemäßen Verfahrens können wie folgt umrissen werden:

In der ersten Stufe (a) des Verfahrens zur Herstellung der erfindungsgemäß einzusetzenden modifizierten Melamin-Formaldehyd-Vorkondensate kann jedes beliebige Aldehyd eingesetzt werden, wobei jedoch Formaldehyd bevorzugt verwendet wird, dies als Gas, in Form von Lösungen, vorzugsweise in Form von wässrigen Lösungen oder auch als Festkörper, beispielsweise als Paraformaldehyd. Vorzugsweise wird in der ersten Stufe das Melamin, der Aldehyd und die Verbindung (I) in einem molaren Verhältnis von etwa 1:3,5 bis 6:0,5 bis 1 eingesetzt. Der pH-Wert beträgt in der ersten Stufe vorzugsweise etwa 9,0 bis 13,0, während die Reaktionstemperatur vorzugsweise zwischen etwa 75 und 100°C liegt. Unterhalb 75°C löst sich im allgemeinen das Melamin, z.B. in Wasser, schlecht. Oberhalb 100°C läuft die exotherme Reaktion der ersten Stufe in der Regel so rasch ab, daß unlösliche Harze in unerwünschtem Umfange entstehen können.

In der zweiten Stufe (b) werden das Vorkondensat aus der ersten Stufe und die Verbindungen aus der Gruppe (II) vorzugsweise in einem molaren Verhältnis, bezogen auf das in der ersten Stufe verwendete Melamin, von 1:0,1 bis 3 eingesetzt. Von besonderem Vorteil ist es für die zweite Kondensationsstufe, als Verbindung der Gruppe (II) ein Gemisch aus Sulfaminsäure und Glutaminsäure zu verwenden, insbesondere ein Gemisch aus gleichen Gewichtsteilen Sulfaminsäure und Glutaminsäure. In der zweiten Stufe wird durch die Zugabe der Verbindung (II) der pH-Wert auf etwa 5,5 bis 7,0 eingestellt und die Polykondensation weitergeführt, wobei die eingesetzte saure Verbindung in das Harzmolekül mit eingebaut wird, so daß hierdurch das Polymermolekül modifiziert wird. Es empfiehlt sich, den pH-Wert von etwa 5,5 nicht zu weit zu unterschreiten. So besteht beispielsweise bei einem pH-Wert von etwa 4,5 die Gefahr, daß die Reaktion bei den bevorzugten Temperaturen in dem Bereich von etwa 75 bis 100°C so rasch abläuft, daß unlösliche feste Harze in unerwünschtem Umfange entstehen. Das Herstellungsverfahren des erfindungsgemäß eingesetzten modifizierten Melamin-Formaldehyd-Vorkondensats wird vorzugsweise im Hinblick auf Ausgangsmaterialien und Verfahrensparameter so gesteuert, daß die Substituentengruppen in der Melamin-Grundstruktur die Gruppen $NH(CH_2)_6COOH$ und/oder $-NHSO_3H$ aufweisen.

Die nach dem beschriebenen Herstellungsverfahren gewonnenen Lösungen von erfindungsgemäß zur Dispersionsstabilisierung eingesetzten Melamin-Formaldehyd-Harzen können sowohl verdünnt als auch verdickt werden; insbesondere können sie sprühgetrocknet und in einem späteren Zeitpunkt wieder aufgelöst werden. Das Verfahren wird regelmäßig bei Umgebungsdruck durchgeführt. Es kann jedoch auch bei Überdruck und bei Unterdruck (Vakuum) durchgeführt werden. Die gewonnenen Lösungen enthalten in der Regel weniger als etwa 0,1 Gew.-% an Sulfat, was einen merklichen Fortschritt gegenüber den geschilderten sulfonierten Melamin-Formaldehyd-Vorkondensaten darstellt. Eine übermäßige Fremdsalzbelastung des Kapselherstellungsverfahrens ist daher weitestgehend ausgeschlossen.

Die in der obigen Weise hergestellten Lösungen bzw. die durch Trocknung erhaltenen Feststoffe werden dann im Rahmen des erfindungsgemäßen Kapselherstellungsverfahrens eingesetzt. Hierzu wird auf die vorausgegangene Beschreibung verwiesen. Die letztlich erfindungsgemäß erhaltenen Mikrokapseln, die eine Lösung oder Dispersion verschiedener Substanzen, insbesondere in Form von Farbreaktionspartnern von Farbreaktionssystemen enthalten, können in üblicher Weise isoliert werden, so beispielsweise durch Eintrocknen oder Sprühtrocknen, und fallen hierbei in Form vorteilhafter Einzelkapseln unter weitgehendem Ausschluß von Agglomeratbildung an. Diese Kapseln können erneut redispergiert und dann vorzugsweise zum segmentartigen Drucken verwendet werden, insbesondere in weitgehend wasserfreien Druckfarben zum Einsatz beim Flexodruck, Siebdruck, Naß- und Trockenoffsetdruck und Tiefdruck.

Nachfolgend soll die Erfindung anhand verschiedener Ausführungsbeispiele noch näher erläutert werden:

Beispiel 1

Herstellung des modifizierten Melamin-Formaldehyd-Vorkondensats:

Eine Lösung, bestehend aus 130 Gew.-Teilen (1,6 Mol) 37%igem Formalin, 120 Gew.-Teilen Wasser und 43,4 Gew.-Teilen 50%iger Natronlauge, wurde nacheinander mit 44,6 Gew.-Teilen (0,48 Mol) Sulfaminsäure und 56 Gew.-Teilen (0,44 Mol) Melamin versetzt. Danach wurde auf 80°C erwärmt und dann 60 min lang bei dieser Temperatur gerührt. Anschließend wurde das entstandene Vorkondensat zuerst mit 2,6 Gew.-Teilen 50%iger Natronlauge und dann mit 19 Gew.-Teilen (0,1 Mol) Sulfanilsäure versetzt, wobei der pH-Wert auf 5,9 abfiel. Die Reaktionsmischung wurde 1 h lang auf 80°C erhalten. Anschließend wurde mit Natronlauge auf einen pH-Wert von 10,1 eingestellt und auf Raumtemperatur abgekühlt. Es entstand eine klare, farblose Polymerlösung mit einem Trockengehalt von 41% und einer Viskosität von 37 mPa.s.

Herstellung von Mikrokapseln:

5 kg der nach vorstehendem Herstellungsbeispiel erhaltenen 41%igen wässrigen Lösung des modifizierten anionischen Melamin-Formaldehyd-Vorkondensates wurden bei etwa 22°C mit 30 kg Wasser verdünnt. Unter intensivem Rühren mit einem Hochleistungsdispergiergerät wurden 6,0 kg einer wässrigen Lösung eines kationischen Melamin-Formaldehyd-Vorkondensates hinzugegeben, die durch Auflösen von 1,5 kg eines kationischen Melamin-Formaldehyd-Vorkondensats (vertrieben unter der Handelsbezeichnung BC 789 durch die Firma BIP, Großbritannien) in 4,5 kg Wasser erhalten wurde. Zu dieser Lösung von etwa 22°C wurden unter Rühren mit einem Hochleistungsdispergiergerät 27,2 kg einer 45°C warmen öligen Phase gegeben, die durch Auflösen von 1,1 Gew.-% 1,3-Dimethyl-6-diethylaminofluoran, 0,4 Gew.-% Kristallviolettlakton, 0,2 Gew.-% 3,3-Bis-(1'-n-oktyl-2'-methyl-indol-3'-yl)-phthalid, 2,4 Gew.-% 2-Oktylamino-6-diethylamino-fluoran, 0,3 Gew.-% 9-N-Butyl-carbazolyl-(3)-4',4"-bis-(N-methyl-,N-phenylamino)-diphenylmethan und 0,6 Gew.-% 10-Benzoyl-3,7-bis-(dimethylamino)-phenothiazin in Diisopropylnaphthalin erhalten wurde. Die resultierende stabile Emulsion von etwa 40°C wurde unter Weiterrühren mit einem normalen Flügelrührer mit einer Lösung aus 2 kg Wasser und 0,6 kg einer 85%igen Ameisensäure versetzt, wobei sich ein pH-Wert von etwa 3,4 einstellte. Die auf diese Weise sauer eingestellte stabile Emulsion wurde unter ständigem Rühren mit einer Wandbildnerlösung aus 7 kg einer 60%igen Lösung eines methylierten Melamin-Formaldehyd-Vorkondensats in Wasser (vertrieben unter der Handelsbezeichnung Resin 42-91 von der Firma Ceca SA, Paris) und 6 kg Wasser versetzt und anschließend ebenfalls unter Rühren auf 55°C erwärmt und 4 h lang bei dieser Temperatur gerührt. Nach dem Abkühlen auf Raumtemperatur und Einstellen des pH-Wertes auf 8,8 mit 25%igem Ammoniakwasser fiel eine Kapseldispersion an, deren Kapseln einen Durchmesser von etwa 3 bis 8 Mikrometern hatten und die einen Trockengehalt von etwa 38 Gew.-% aufwies.

Die Kapseln liegen als Einzelkapseln mit den damit verbundenen Vorteilen vor, so beispielsweise vorteilhafte Redispergierung von Einzelkapseln in geeigneten Dispersionsmitteln.

Beispiel 2

Zu einer Lösung von Raumtemperatur, hergestellt durch Vermischen von 211,5 kg Wasser und 40 kg einer 41%igen wässrigen Lösung eines modifizierten anionischen Melamin-Formaldehyd-Vorkondensats (hergestellt gemäß Herstellungsbeispiel 1) wurden unter gelindem Rühren mit einem Flügelrührer 56 kg einer Lösung eines kationisierten Melamin-Formaldehyd-Vorkondensats von Raumtemperatur hinzugefügt; letztere Lösung wurde durch Auflösen von 3 kg Madurit MW 150 (vertrieben von der Firma Cassella AG, Ludwigshafen), 45 kg Wasser und 1,2 kg 85%iger Ameisensäure gewonnen. Es resultierte eine kolloidale opake Lösung. Zu dieser Lösung wurden unter Rühren mit einem Hochleistungsdispergiergerät 417,3 kg einer etwa 42°C warmen Ölphase gegeben, die aus 156,5 kg Chlorparaffin und 252 kg Kerosin sowie insgesamt 8,8 kg Farbbildner bestand. Als Farbbildner wurde ein Gemisch aus 75% Kristallviolettlakton und 25% 9-N-Butyl-carbazolyl-(3)-4',4"-bis-(N-methyl-,N-phenylamino)-diphenylmethan verwendet. Die sich bildende Emulsion wies einen Tröpfchendurchmesser von etwa 3 bis 10 Mikrometern auf, der sich bei den weiteren Verfahrensschritten nicht signifikant änderte.

Durch Hinzufügen von 20 l einer 20%igen wässrigen Ameisensäure unter gelindem Rühren wurde das System auf einen pH-Wert von etwa 3,4 eingestellt. Anschließend wurden 131 kg einer wässrigen Lösung eines nicht-ionischen Melamin-Formaldehyd-Vorkondensates, gebildet aus 80 kg des Handelsproduktes BC 336 (vertrieben von der Firma Bip, Großbritannien) und 51 kg Wasser, hinzugegeben.

Nach Erwärmen der Emulsion auf 58°C und Halten der Temperatur während 3,5 h unter leichtem Rühren bildete sich eine Kapseldispersion, die nach dem Abkühlen und Neutralisieren mit 25%igem Ammoniakwasser bis auf den pH-Wert von 8 Kapseln eines Durchmessers von etwa 3 bis 10 Mikrometern entstehen ließ. Diese wies gleiche Eigenschaften wie die des Beispiels 1 auf. Der Trockensubstanzgehalt der Dispersion lag bei etwa 47 Gew.-%

Beispiel 3

42 kg einer 41%igen Lösung eines modifizierten anionischen Melamin-Formaldehyd-Vorkondensates (gemäß Herstellungsbeispiel 1) wurden in 250 kg Wasser verdünnt und unter Rühren 55 kg einer wässrigen Lösung, gebildet aus 40 kg Wasser und 6 kg einer 30%igen Lösung eines kationischen, modifizierten MF-Vorkondensats (vom Typ Protesine M 150, vertrieben von der Firma Protex, Bundesrepublik Deutschland) bei Raumtemperatur hinzugefügt.

Unter Verwendung eines Hochleistungsdispergiergerätes wurden bei Raumtemperatur 197 kg einer flüssigen Phase einemulgiert, die aus einem neutralen geruchsarmen, niedrigviskosen, wasserunlöslichen Verdünneröl und einem darin gelösten Klebstoffharz vom Typ Polyisobutylen bestand. Die Emulsion wies einen Tröpfchendurchmesser von etwa 3 bis 12 Mikrometern auf und blieb während der weiteren Verfahrensschritte stabil.

Durch Zugabe von 31 kg 20%iger Ameisensäure unter Rühren mit einem Flügelrührer zu der Emulsion und weiterem Hinzufügen einer Lösung aus 50 kg Wasser und 55 kg einer 70%igen Lösung eines methylolierten Melamin-Formaldehyd-Vorkondensates und anschließendes Aufheizen auf 55°C und Halten dieser Temperatur während 4 h bildete sich eine Kapseldispersion. Durch Abkühlen und Zugabe von 25%iger wässriger Ammoniaklösung wurde ein pH-Wert von 7,5 eingestellt. Anschließend wurden 7 kg Ethylenharnstoff hinzugefügt. Nach 1 h Rührzeit war der pH-Wert unter 7 gefallen. Er wurde erneut mit Ammoniakwasser auf 7 eingestellt. Die Kapseldispersion ließ sich zu einem sehr lockeren, extrem feinpulvrigen Material sprühtrocknen.

Vergleichsbeispiel 1

Das Beispiel 1 wurde mit der Abänderung wiederholt, daß es ohne Lösung des kationischen Melamin-Formaldehyd-Vorkondensats durchgeführt wurde. Unmittelbar nach Beendigung des Rührens mit dem Hochleistungsdispergiergerät brach die Emulsion zusammen. Das Öl sammelte sich zum Teil in Pfützen auf der Flüssigkeitsoberfläche. Eine Kapselherstellung war nicht möglich.

Vergleichsbeispiel 2

Das Beispiel 2 wurde wiederholt, jedoch ohne die Lösung des kationischen Melamin-Formaldehyd-Vorkondensats. Wie bei Vergleichsbeispiel 1 beschrieben, konnten keine brauchbaren Kapseln hergestellt werden.

Vergleichsbeispiel 3

Das Beispiel 3 wurde wiederholt, ohne daß das kationische modifizierte Melamin-Formaldehyd-Vorkondensat vom Typ Protesine M 150 hinzugefügt wurde. Wie bei den Vergleichsbeispielen 1 und 2 gezeigt, konnten keine Kapseln hergestellt werden, weil auch hier die Ölemulsion nicht stabil war.

**Patentansprüche**

1. Verfahren zur Mikroverkapselung von hydrophoben Ölen mit darin gelösten oder dispergierten Substanzen, wobei ein die Substanz gelöst oder dispergiert enthaltendes hydrophobes Öl unter starkem Rühren in ein eine dispersionsstabilisierende Verbindung enthaltendes wässriges Medium eingemischt wird, in der erhaltenen Öl-in-Wasser-Dispersion in üblicher Weise Aminoplastkapseln gebildet und diese gegebenenfalls anschließend isoliert werden, wobei das wässrige Medium ein wasserlösliches modifiziertes anionisches Melamin-Formaldehyd-Vorkondensat sowie eine solche wasserlösliche kationische Verbindung enthält, die in Wechselwirkung miteinander eine dispersionsstabilisierende Verbindung bilden, dadurch **gekennzeichnet**, daß ein solches wasserlösliches anionisches modifiziertes Melamin-Formaldehyd-Vorkondensat eingesetzt wird, das dadurch erhalten worden ist, indem man

a) in einer ersten Stufe Melamin und einen Aldehyd bei erhöhter Temperatur in alkalischem Medium und in Gegenwart von Wasser mit wenigstens einer Verbindung (I) in Form eines Alkalisulfits, Erdalkalisulfits, eines Alkalisulfamats, eines Erdalkalisulfamats, einer Aminosulfonsäure, einer Aminocarbonsäure und einer Aminodicarbonsäure zu einem Vorkondensat umsetzt,

b) anschließend in einer zweiten Stufe dieses Vorkondensat bei einem pH-Wert von etwa 5,5 bis 7,0 einer Polykondensation unterwirft, indem man mit wenigstens einer sauren Verbindung (II) in Form von Sulfaminsäure, einer Aminocarbonsäure, einer Aminodicarbonsäure, einer Hydroxycarbonsäure, einer Polyhydroxycarbonsäure und einer Aminosulfonsäure ansäuert, und

c) nach beendigter Polykondensation die erhaltene Harzlösung gegebenenfalls durch Zugabe wenigstens einer basischen Verbindung (III) alkalisch stellt.

2. Verfahren nach Anspruch 1, dadurch gekennzeichnet, daß man in der ersten Stufe das Melamin, den Aldehyd und die Verbindung (I) in einem molaren Verhältnis von etwa 1:3,5 bis 6:0,5 bis 1 einsetzt.

3. Verfahren nach Anspruch 1 oder 2, dadurch gekennzeichnet, daß man in der ersten Stufe bei einem pH-Wert von etwa 9,0 bis 13,0 arbeitet.

4. Verfahren nach einem der Ansprüche 1 bis 3, dadurch gekennzeichnet, daß man in der ersten Stufe bei einer Temperatur von etwa 75 bis 100°C arbeitet.

5. Verfahren nach mindestens einem der Ansprüche 1 bis 4, dadurch gekennzeichnet, daß man in der zweiten Stufe das Vorkondensat aus der ersten Stufe und die Verbindungen aus der Gruppe II in einem molaren Verhältnis, bezogen auf das in der ersten Stufe verwendete Melamin, von 1:0,1 bis 3 einsetzt.

6. Verfahren nach mindestens einem der Ansprüche 1 bis 5, dadurch gekennzeichnet, daß man in der zweiten Kondensationsstufe als Verbindung der Gruppe (II) ein Gemisch aus Sulfaminsäure und Glutaminsäure verwendet, insbesondere ein Gemisch aus gleichen Gewichtsteilen Sulfaminsäure und Glutaminsäure.

7. Verfahren nach mindestens einem der Ansprüche 1 bis 6, dadurch gekennzeichnet, daß man in der zweiten Stufe bei einer Temperatur von etwa 75 bis 100°C arbeitet.

8. Verfahren nach mindestens einem der Ansprüche 1 bis 7, dadurch gekennzeichnet, daß man als basische Verbindung (III) eine Verbindung in Form von Alkalihydroxid, einem Erdalkalioxid, einem Erdalkalihydroxid, einem Amin, einem Polyamin, Monoethanolamin, Diethanolamin, Triethanolamin und/oder einer basischen Metallverbindung einsetzt.

9. Verfahren nach mindestens einem der Ansprüche 1 bis 8, dadurch gekennzeichnet, daß der Aldehyd Formaldehyd ist.

10. Verfahren nach mindestens einem der Ansprüche 1 bis 9, dadurch gekennzeichnet, daß das eingesetzte modifizierte Melamin-Formaldehyd-Vorkondensat die Substituentengruppen $NH(CH_2)_6COOH$ und/oder $-NHSO_3H$ aufweist.

11. Verfahren nach mindestens einem der vorhergehenden Ansprüche, dadurch gekennzeichnet, daß in dem einzukapselnden hydrophoben Öl der Farbreaktionspartner eines Farbreaktionssystems gelöst oder dispergiert ist.

12. Mikrokapseln, erhältlich durch Isolierung aus der Mikrokapseldispersion, die nach dem Verfahren gemäß mindestens einem der Ansprüche 1 bis 10 erhalten wurde, insbesondere durch Eintrocknen oder Sprühtrocknen.

13. Verwendung der Mikrokapseln nach Anspruch 12 in Farbreaktionssystemen, insbesondere in Farbreaktionsaufzeichnungspapieren.

14. Verwendung nach Anspruch 13 zum segmentartigen Drucken.

15. Verwendung nach Anspruch 14 in weitgehend wasserfreien Druckfarben zum Einsatz beim Flexodruck, Siebdruck, Naß- und Trockenoffsetdruck und Tiefdruck.

**Claims**

1. A method for micro-encapsulating hydrophobic oils with substances dissolved or dispersed therein, where in a hydrophobic oil containing the substance in solution or dispersion is mixed with vigorous agitation into an aqueous medium containing a dispersion-stabilising compound, in the usual manner aminoplastic capsules are formed in the oil-in-water dispersion obtained and these may be subsequently isolated,the aqueous medium containing a water-soluble modified anionic melamine formaldehyde precondensate and such a water-soluble cationic compound as form, in interaction with one another, a dispersion-stabilising compound, characterised in that such a water-soluble anionic modified melamine formaldehyde pre-condensate is used as was obtained in the following way :
   a) in a first stage melamine and an aldehyde at elevated temperature in alkaline medium and in the presence of water with at least one compound (1) in the form of an alkali sulphite, alkaline earth sulphite, an alkali sulphamate, an alkaline earth sulphamate, an amino sulphonic acid, an aminocarboxylkic acid and an amino dicarboxylic acid is converted into a precondensate.
   b) next, in a second stage, one subjects this precondensate at a pH value of about 5.5 to 7.0 to a poly-condensation by acidulation with at least one acid compound (11) in the form of sulphaninic acid, an aminocarboxylic acid, an aminodicarboxylic acid, a hydroxycarboxylic acid, a polyhydroxy carboxylicacid and an aminosulphonic acid, and
   c) after termination of polycondensation, the obtained resin solution is set to alkaline, possibly by addition of at least one basic compound (111).

2. A method according to Claim 1, characterised in that in the first stage the melamine, aldehyde and the compound (1) are used in a molecular ratio of about 1 : 3.5 to 6.05 to 1.

3. A method according to Claim 1 or 2, characterised in that in the first stage one works with a pH value of about 9.0 to 13.0.

4. A method according to at least one of Claims 1 to 3, characterised in that in the first stage one works with a temperature of about 75 to 100° C.

5. A method according to at least one of Claims 1 to 4, characterised in that in the second stage the pre-condensate from the first stage and the compounds of group II are used in a molecular ratio, in relation to the melamine used in the first stage, of 1 : 0.1 to 3.

6. A method according to at least one of Claims 1 to 5, characterised in that in the second condensation stage, as compound of Group (11), there is used a mixture of sulphaminic acid and glutaminic acid, especially a mixture of equal parts by weight of sulphaminic acid and glutaminic acid.

7. A method according to at least one of Claims 1 to 6, characterised in that in the second stage one works with a temperature of about 75 to 100° C.

8. A method according to at least one of Claims 1 to 7, characterised in that as basic compound (111) one uses a compound in the form of alkaline hydroxide, an alkaline earth oxide, an alkaline earch hydroxide, an amine, a polyamine, monoethanolamine, diethanolamine, triethanolamine and/or a basic metal compound.

9. A method according to at least one of Claims 1 to 8, characterised in that the aldehyde is formaldehyde.

10. A method according to at least one of Claims 1 to 9, characterised in that the modified melamine formaldehyde precondensate used comprises the substitute groups $NH(CH_2)_6CCCH$ and/or $-NHSO_3H$.

11. A method according to at least one of the preceding Claims, characterised in that the colour reaction partner of a colour reaction system is dissolved or dispersed in the hydrophobic oil to be encapsulated.

12. Microcapsules obtainable by isolation from the micro-capsule dispersion which was obtained by the method according to at least one of Claims 1 to 10, especially by drying or spray drying.

13. The use of micro-capsules according to Claim 12 in colour reaction systems, especially in colour reaction recording papers.

14. Use according to Claim 13 for segmental printing.

15. Use according to Claim 14 in largely water-free printing inks for use in flexo-printing, screen printing, wet and dry offset printing and intaglio printing.

## Revendications

1. Procédé de micro-encapsulation d'huiles hydrophobes contenant des substances dissoutes ou dispersées, dans lequel une huile hydrophobe contenant la substance en solution ou en dispersion est incorporée en mélange sous agitation énergique dans un milieu aqueux contenant un composé stabilisant la dispersion, des capsules d'aminoplaste sont formées de manière classique dans la dispersion huile-dans-eau obtenue et ces capsules sont ensuite isolées le cas échéant, le milieu aqueux contenant un précondensat mélamine-formaldéhyde anionique modifié hydrosoluble de même qu'un composé cationique hydrosoluble, formant par interaction un composé stabilisant la dispersion, caractérisé en ce qu'on utilise un précondensat mélamine-formaldéhyde modifié anionique hydrosoluble qui a été obtenu de façon telle que

   a) dans une première étape, on fait réagir de la mélamine et un aldéhyde à température élevée en milieu alcalin et en présence d'eau avec au moins un composé (I) sous forme d'un sulfite alcalin, d'un sulfite alcalino-terreux, d'un sulfamate alcalin, d'un sulfamate alcalino-terreux, d'un acide aminosulfonique, d'un acide amino-carboxylique et d'un acide aminodicarboxylique pour produire un précondensat,

   b) on soumet ensuite dans une seconde étape ce précondensat à un pH d'environ 5,5 à 7,0 à une polycondensation par acidification avec au moins un composé acide (II) sous forme d'acide sulfamique, d'un acide aminocarboxylique, d'un acide aminodicarboxylique, d'un acide hydroxycarboxylique, d'un acide polyhydroxycarboxylique et d'un acide aminosulfonique et

   c) lorsque la polycondensation est terminée, on alcalinise éventuellement par addition d'au moins un composé basique (III) la solution de résine obtenue.

2. Procédé suivant la revendication 1, caractérisé en ce qu'on utilise dans la première étape la mélamine, l'aldéhyde et le composé (I) dans une proportion molaire d'environ 1:3,5 à 6:0,5 à 1.

3. Procédé suivant la revendication 1 ou 2, caractérisé en ce qu'on opère dans la première étape à un pH d'environ 9,0 à 13,0.

4. Procédé suivant l'une des revendications 1 à 3, caractérisé en ce qu'on opère dans la première étape à une température d'environ 75 à 100°C.

5. Procédé suivant l'une au moins des revendications 1 à 4, caractérisé en ce qu'on utilise dans la seconde étape le pré-condensat venant de la première étape et les composés du groupe (II) dans un rapport molaire de 1:0,1 à 3, par rapport à la mélamine utilisée dans la première étape.

6. Procédé suivant l'une au moins des revendications 1 à 5, caractérisé en ce qu'on utilise dans la seconde étape de condensation, comme composé du groupe (II), un mélange d'acide sulfamique et d'acide glutamique, notamment un mélange de parties égales en poids d'acide sulfamique et d'acide glutamique.

7. Procédé suivant l'une au moins des revendications 1 à 6, caractérisé en ce qu'on opère dans la seconde étape à une température d'environ 75 à 100°C.

8. Procédé suivant l'une au moins des revendications 1 à 7, caractérisé en ce qu'on utilise comme composé basique (III) un composé sous forme d'hydroxyde alcalin, d'un oxyde alcalino-terreux, d'un hydroxyde alcalino-terreux, d'une amine, d'une polyamine, de monoéthanolamine, de diéthanolamine, de triéthanolamine et/ou d'un composé métallique basique.

9. Procédé suivant l'une des revendications 1 à 8, caractérisé en ce que l'aldéhyde est le formaldéhyde.

10. Procédé suivant l'une au moins des revendications 1 à 9, caractérisé en ce que le précondensat mélamine-formaldéhyde modifié utilisé porte les groupes substituants $NH(CH_2)_6COOH$ et/ou $-NHSO_3H$.

11. Procédé suivant l'une au moins des revendications précédentes, caractérisé en ce que le partenaire réactif d'un système de réaction colorée est dissous ou dispersé dans l'huile hydrophobe à encapsuler.

12. Microcapsules obtenues par isolement de leur dispersion qui a été obtenue par le procédé suivant l'une au moins des revendications 1 à 10, notamment par évaporation à sec ou par séchage par pulvérisation.

13. Utilisation des microcapsules suivant la revendication 12 dans des systèmes pour réactions colorées, notamment dans des papiers d'enregistrement de réactions colorées.

14. Utilisation suivant la revendication 13, pour l'impression par segments.

**15.** Utilisation suivant la revendication 14 dans des encres d'impression largement dépourvues d'eau, destinées à être appliquées à l'impression flexographique, à la sérigraphie, à l'impression offset par voie humide et par voie sèche et à l'impression en creux.

**10**